**Europäisches Patentamt**

(19) **European Patent Office**

**Office européen des brevets**

(11) Veröffentlichungsnummer: **0 008 404**
**B1**

(12) # EUROPÄISCHE PATENTSCHRIFT

(45) Veröffentlichungstag der Patentschrift:
**15.09.82**

(51) Int. Cl.³: **G 01 N 21/25**, G 01 N 21/27

(21) Anmeldenummer: **79102842.6**

(22) Anmeldetag: **07.08.79**

(54) **Photometer mit austauschbaren Eichskalen.**

(30) Priorität: **28.08.78 DE 2837443**

(43) Veröffentlichungstag der Anmeldung:
**05.03.80 Patentblatt 80/5**

(45) Bekanntmachung des Hinweises auf die Patenterteilung:
**15.09.82 Patentblatt 82/37**

(84) Benannte Vertragsstaaten:
**CH DE FR GB IT NL**

(56) Entgegenhaltungen:
**US-A-3 441 352**
**US-A-3 594 086**
**US-A-3 676 007**
**US-A-3 797 145**
**US-A-4 003 662**
**F. D. SNELL et al.: »Colorimetric methods of analysis«, III. Ausgabe, 1948. Ausg. Van Nostrand Co., New York, USA, Teil XI. »Photoelectric Filter photometers«, Seiten 89—104.**

(73) Patentinhaber: **Merck Patent Gesellschaft mit beschränkter Haftung, Frankfurter Strasse 250, D-6100 Darmstadt (DE)**

(72) Erfinder: **Bodart, Detlef, Dr., Karlstrasse 56, D-6100 Darmstadt (DE)**

Photometer mit austauschbaren Eichskalen

Die Erfindung betrifft ein Photometer mit austauschbaren Eichskalen, das im wesentlichen aus einem Galvanometer, dessen Abdeckung an der Unterseite mit einem Schlitz versehen ist, und einer eine Küvettenöffnung enthaltenden Zone besteht.

In der Kolorimetrie, einem in der chemischen Analytik sehr gebräuchlichen Analysenverfahren, werden die in Lösung zu messenden Stoffe durch Reagenzzugabe zu farbigen Verbindungen umgesetzt, aus deren Farbintensität die Konzentration des zu bestimmenden Stoffes abgeleitet werden kann. Die instrumentelle Farbintensitätsmessung erfolgt mit lichtelektrischen Kolorimetern oder Spektralphotometern. In bestimmten Bereichen der Analytik werden z. B. Photometer mit austauschbaren, direkt in Konzentrationen geeichten Skalen verwendet. Jede Eichskala ist auf eine spezifische, oft als Reagenziensatz vorgefertigte Meßmethode abgestimmt. In jedem Falle müssen jedoch vor einer Messung am Photometer eine Reihe von Parametern festgelegt werden. Bei einem Kolorimeter einfacher Bauart sind dies z. B. die Wahl der entsprechenden Wellenlänge, die Wahl der Küvettengröße und die Einstellung des Gerätes auf die sogenannte Null-Extinktion, d. h. die Einstellung des Blindwertes. .

Aus US-A-3 594 086 ist z. B. ein Kolorimeter mit austauschbaren Eichskalen bekannt, das aus einer Vielzahl von Lichtleitfasern, Photozellen, Küvettenöffnungen für die Inkubation von Proben und Einstellmöglichkeiten entsprechend den verschiedenen Eichskalen besteht. Die Eichskalen werden von oben in den Galvanometerbereich eingeführt, wobei lediglich dieser Teil des Kolorimeters von den Eichskalen bedeckt wird, während sich die die Küvettenöffnung enthaltende Zone seitlich an das Galvanometer anschließt.

Es kommt in der Praxis relativ häufig vor, daß einer der obengenannten Parameter falsch eingestellt wird, z. B. daß die Wellenlänge aus der vorausgegangenen Bestimmung nicht umgestellt wird oder daß eine falsche, nicht zur Eichskala passende Gebrauchsanleitung gewählt wird.

Der Erfindung liegt deshalb die Aufgabe zugrunde, ein Photometer zur Verfügung zu stellen, mit dem diese Fehler weitgehend vermieden werden können. Gelöst wird diese Aufgabe erfindungsgemäß durch ein Photometer mit austauschbaren Eichskalen, das aus drei nacheinander angeordneten Zonen besteht, einer Galvanometerzone, einer die Küvettenöffnung enthaltenden Zone und einer Zone, die als Auflagebasis für die Eichskalen dient.

Gegenstand der Erfindung ist ein Photometer mit austauschbaren Eichskalen, das im wesentlichen aus einem Galvanometer, dessen Abdeckung an der Unterkante mit einem Schlitz versehen ist, und einer eine Küvettenöffnung enthaltenden Zone besteht, das dadurch gekennzeichnet ist, daß sich die Zone nach unten an das Galvanometer anschließt und die auf dieser Zone aufliegenden mittleren Zonen der Eichskalen ein Loch entsprechend dem Durchmesser einer Küvette besitzen und in gleicher Höhe der Küvettenöffnung an beiden Seiten des Photometers je ein Drehknopf zur Einstellung des Blindwertes und ein Drehknopf zur Einstellung der Meßwellenlänge angeordnet ist und die unmittelbar daneben liegende Eichskalenfläche Markierungen bzw. Kodefarben besitzt, die bei einer bestimmten Messung mit Markierungen bzw. Kodefarben auf dem Drehknopf übereinstimmen und sich an die Zone nach unten eine als Auflagebasis für die Eichskalen dienende Zone anschließt und die Fläche der Eichskalen etwa der Photometeroberfläche entspricht.

Aus US-A-3 676 007 ist an sich ein Filterphotometer mit Eichskalen und Farbfiltern sowie eine spezielle Anordnung zur automatischen Auswahl von Skalen und Filtern entsprechend der durchzuführenden Analyse bekannt. Mit diesem Photometer können ebenfalls Fehler weitgehend vermieden werden. Die Eichskalen sind auf der Oberfläche eines endlosen Bandes aufgedruckt, das innerhalb des Gehäuses drehbar angeordnet und über komplizierte Anordnungen mit dem Filtersystem verbunden ist.

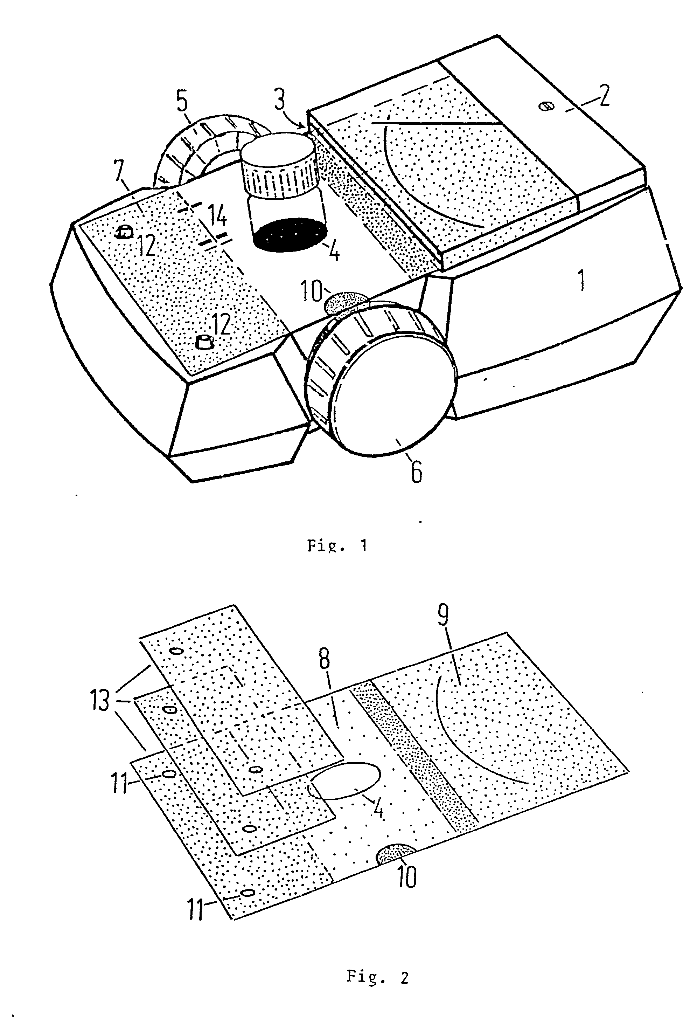

In den Zeichnungen ist die bevorzugte Ausführungsform des Photometers und der Eichskalen perspektivisch dargestellt. Fig. 1 zeigt eine Gesamtansicht des Photometers, Fig. 2 eine Eichskala mit mehreren Gebrauchsanleitungen.

Die Grundform des Photometers ist ein schmales Pult (1), bei dem die Länge das Breitenmaß übertrifft. Am oberen Ende befindet sich ein Galvanometer (2) als Anzeigeinstrument, dessen Abdeckung an der Unterkante mit einem Schlitz (3) zum Einschieben der Eichskalen versehen ist. Im Mittelpunkt der mittleren Zone (8) des Photometers ist eine Küvettenöffnung (4).

In etwa gleicher Höhe der Küvettenöffnung befindet sich an beiden Seiten des Photometers je ein Drehknopf (5, 6). Die untere Zone (7) des Gerätes dient als Auflagebasis für Gebrauchsanleitungen. Die Eichskalen, die vorzugsweise ein länglich-rechteckiges Format etwa in DIN-A-6-Größe haben, sind im oberen Drittel mit der in Konzentrationseinheiten abzulesenden Skala (9) versehen. Im Mittelpunkt der mittleren Zone der Eichskala befindet sich ein gestanztes Loch zum Durchstecken von Küvetten (4), wobei der Durchmesser dieses Loches auf die zu verwendende Küvettengröße abgestimmt ist. Die Verwendung von kleineren Küvetten bei Karten mit großem Stanzloch wird durch Sichtbarwerden einer ringförmigen Warnmarkierung, die ein Teil des notwendigen Verkleinerungseinsatzes bildet, verhindert.

Einer der beiden Knöpfe (5) dient zur Blindwerteinstellung (Nullpunktabgleich) des Anzeigegerätes. Er befindet sich vorzugsweise auf der Seite des Photometers, auf der die Anzeigenadel den entsprechenden Anschlag hat. Dies wird z. B. auf der Eichskala durch eine Linie zwischen diesem Knopf (5) und dem Anschlag der Nadel (Nullpunkt der Skala) angezeigt. Der zweite Knopf (6) auf der entgegengesetzten Seite des Photometers dient zur Einstellung der Wellenlänge. Bei einfacheren Geräten ist dies ein Mehrstufenschalter, mit dem entsprechende Farb- oder Interferenzglasfilter in den Strahlengang gebracht werden. Das Absorptionsmaximum des Filters wird durch eine in etwa komplementär gefärbte, d. h. etwa der Meßlösung entsprechende Farbe am Rand des Einstellknopfes angezeigt. Die Kodefarbe bzw. Markierung des zur Messung vorgeschriebenen Filters befindet sich gleichzeitig auf der danebenliegenden Kartenfläche (10), so daß Messungen bei falscher Filtereinstellung praktisch ausgeschlossen sind. Am unteren Ende der Karte befinden sich mindestens zwei Löcher (11), die durch entsprechende Nocken (12) einen genauen Sitz gewährleisten. Hier ist eine kurz gefaßte Gebrauchsanleitung aufgedruckt. Diese kann durch fremdsprachige Gebrauchsanleitungen auf kleineren Karten (13) überdeckt werden, wobei Löcher (11) und Nocken (12) auch hier einen guten Sitz gewährleisten. Eine Kodierung mit durchgehenden Strichen (14) verhindert, daß eine Fremdsprachenkarte aufgelegt wird, die nicht dem deutschen Text entspricht. Position und Größe der Löcher (11) entsprechen vorzugsweise dem Abstand und Durchmesser der Löcher, die mit den üblichen Löchern erhalten werden. Die Größe der Eichskalen entspricht vorzugsweise dem üblichen Ringbuchformat, so daß alle Karten als Sammlung z. B. in einem DIN-A-6-Ringbuchordner untergebracht werden können.

Zur Durchführung einer Analyse wird zunächst die für diese Bestimmung benötigte Eichskala mit der oberen Kante durch den Schlitz der Photometerabdeckung gesteckt und bis zum Anschlag in das Galvanometer geschoben. Beim Auflegen der Eichskala auf die untere Auflagezone des Photometers müssen die Nocken der Auflagezone exakt in die Löcher der Eichskala eingreifen. Die Einstellung der richtigen Wellenlänge erfolgt in der Weise, daß man durch Drehen den Knopf (6) in eine Position bringt, in der die auf dem Knopf angebrachte Kodefarbe mit der direkt danebenliegenden Farbmarkierung auf der Eichskala übereinstimmt. Nun wird eine Küvette mit der Blindprobe in die dafür vorgesehene Öffnung gebracht und mit Hilfe des linken Drehknopfes (5) wird das Galvanometer auf den Nullpunkt eingestellt. Die Blindprobe wird dann durch die Küvette mit der zu untersuchenden Probe ersetzt und die Konzentration des betreffenden Stoffes direkt auf der Eichskala abgelesen. Auf diese Weise lassen sich prinzipiell alle Stoffe bestimmen, die bei Reagenzzugabe entweder eine Farbreaktion eingehen oder im UV-Bereich absorbieren wie z. B. die diagnostisch wichtige quantitative Bestimmung von Inhaltsstoffen von Körperflüssigkeiten, wie Glucose, Chloesterin, Harnstoff, Harnsäure, Eiweiß, Trigyceride usw., pH-Wert-Bestimmungen oder auch die Ermittlung der Konzentrationen bestimmter Kationen und Anionen in Wässern und wässerigen Aufschlußlösungen.

Mit dem erfindungsgemäßen Photometer mit austauschbaren Eichskalen, die alle für die Bestimmung erforderlichen Angaben enthalten, ist es möglich, die in der Praxis ständig auftretenden Fehler, die aus der falschen Einstellung der Geräte resultieren, zu vermeiden.

## Patentansprüche

1. Photometer mit austauschbaren Eichskalen, im wesentlichen bestehend aus einem Galvanometer (2), dessen Abdeckung an der Unterkante mit einem Schlitz (3) versehen ist, und einer eine Küvettenöffnung (4) enthaltenden Zone (8), dadurch gekennzeichnet, daß sich die Zone (8) nach unten an das Galvanometer anschließt und die auf dieser Zone aufliegenden mittleren Zonen der Eichskalen ein Loch (4) entsprechend dem Durchmesser einer Küvette besitzen und in gleicher Höhe der Küvettenöffnung (4) an beiden Seiten des Photometers je ein Drehknopf (5) zur Einstellung des Blindwertes und ein Drehknopf (6) zur Einstellung der Meßwellenlänge angeordnet ist und die unmittelbar daneben liegende Eichskalenfläche (10) Markierungen bzw. Kodefarben besitzt, die bei einer bestimmten Messung mit Markierungen bzw. Kodefarben auf dem Drehknopf (6) übereinstimmen und sich an die Zone (8) nach unten eine als Auflagebasis für die Eichskalen dienende Zone (7) anschließt und die Fläche der Eichskalen etwa der Photometeroberfläche entspricht.

2. Photometer nach Anspruch 1, dadurch gekennzeichnet, daß die als Auflagebasis für die Eichskalen dienende Zone (7) am unteren Ende mindestens zwei Nocken (12) besitzt und die auf der Zone (7) aufliegenden unteren Zonen der Eichskalen mindestens zwei Löcher (11) zur Aufnahme der Nocken (12) enthalten.

## Claims

1. Photometer with interchangeable calibration scales, essentially consisting of a galvanometer (2), the covering of which is provided with a slit (3) at its lower edge, and a zone (8) which contains an orifice (4) for a cell, characterised in that the zone (8) adjoins the galvanometer and that the central zone of the calibration scales, which lies on the zone (8) contains an orifice (4) corresponding to the diameter of a cell, a control knob is located on each side of the photometer at the same height as the orifice (4) for a cell, control knob (5) for adjusting the blank value and control knob (6) for adjusting the measurement wavelength and the calibration scale surface (10) which is immediately adjacent thereto have markings or colour codes which match at a specific measurement with markings or colour codes on the control knob (6) and a zone (7) which serves as a supporting base for the calibration scales adjoins zone (8) and that the surface area of the calibration scales approximately corresponds to the surface area of the photometer.

2. Photometer according to Claim 1, characterised in that the zone (7) which serves as the supporting base for the calibration scales has at least two studs (12) at its lower end and that at least two further holes (11), for receiving the studs (12), are located in the lower zone of the calibration scales, which lies on the following zone (7).

## Revendications

1. Photomètre à échelles d'étalonnage interchangeables, constitué essentiellement par un galvanomètre (2), dont le couvercle est muni d'une fente (3) au niveau de son bord inférieur, et par une zone (8) contenant une ouverture pour cuvette (4), caractérisé en ce que la zone (8) se raccorde vers le bas au galvanomètre et que les zones médianes, situées sur cette zone, des échelles d'étalonnage possèdent un trou (4) d'une taille correspondant au diamètre d'une cuvette et qu'à la même hauteur que l'ouverture pour cuvette (4), des deux côtés du photomètre, se trouvent disposés respectivement un bouton tournant (5) permettant le réglage de la valeur à blanc et un bouton tournant (6) permettant le réglage de la longueur d'ondede mesure, et que la surface (10), de l'échelle d'étalonnage, située à proximité immédiate, comporte des marques ou des couleurs de code, qui, lors d'une mesure déterminée, coïncident avec des marques ou des couleurs de code situées sur le bouton (6), et qu'à la zone (8) se raccorde, vers le bas, une zone (7) servant de base de support pour les échelles d'étalonnage, et que la surface des échelles d'étalonnage correspond approximativement à la surface supérieure du photomètre.

2. Photomètre selon la revendication 1, caractérisé en ce que la zone (7), servant de base de support pour les échelles d'étalonnage, possède à son extrémité inférieure au moins deux ergots (12) et que les zones inférieures des échelles d'étalonnage prenant appui sur la zone (7), comportent au moins deux trous (11) destinés à recevoir les ergots (12).

Fig. 1

Fig. 2